# EUROPÄISCHE PATENTANMELDUNG

(11) **EP 0 761 830 A2**
(43) Veröffentlichungstag der Anmeldung: **12.03.1997**
(21) Anmeldenummer: 96113932.6
(22) Anmeldetag: 30.08.1996
(51) Int. Cl.: C22B 43/00

(54) **Verfahren zur Entfernung von metallischem Quecksilber aus Flüssigkeiten**

(30) Priorität: 01.09.1995 DE 19532364
(71) Anmelder: BASF AKTIENGESELLSCHAFT, 67056 Ludwigshafen (DE)
(72) Erfinder: Schläfer, Dieter, Dr., 67071 Ludwigshafen (DE); Arndt, Volker, Dr., 67240 Bobenheim-Roxheim (DE); Mauss, Michael, Dr., 67346 Speyer (DE); Schmitt, Dieter, Dr., 67273 Weisenheim (DE)
(74) Vertreter: Isenbruck, Günter, Dr.

(57) **Zusammenfassung**

Die Erfindung betrifft ein Verfahren zum Abtrennen von Quecksilber aus Flüssigkeiten, wobei ein metallisches Quecksilber enthaltender Flüssigkeitsstrom in einem Behältnis entlang einer oder mehrerer Oberflächen oder durch ein oder mehrere Medien fließen gelassen wird, die so strukturiert sind, daß sich bei diesem Fluß Quecksilbertropfen wachsender Größe bilden, die im Strom entlang der Oberfläche(n) bzw. durch das Medium hindurch transportiert werden, und wobei die gebildeten Quecksilbertropfen nach Verlassen der Oberflächen bzw. des Mediums sich von dem übrigen Flüssigkeitsstrom trennen und von dem Flüssigkeitsstrom entfernt werden.

## Beschreibung

Die vorliegende Erfindung betrifft ein Verfahren zum Abtrennen von Quecksilber aus metallisches Quecksilber enthaltenden Flüssigkeiten, wie sie beispielsweise bei der Alkalichlorid-Elektrolyse nach dem Quecksilberverfahren anfallen.

Üblicherweise werden zur Abtrennung von Quecksilber aus Produktflüssigkeiten, wie Natron- und Kalilaugen und Alkalimetallalkoholaten Anschwemmfilter verwendet. Diese Filter sind beispielsweise mit Aktivkohle angeschwemmt und, wobei das in der Flüssigkeit enthaltene Quecksilber durch Absorption und Absorption an der Aktivkohle entfernt wird (vgl. Isfort, "Moderne Alkalichlorid-Elektrolyse nach dem Hg-Verfahren - Ausrüstung und Konstruktionsmaterialien der Produktaufbereitungsanlagen", CAV 1972, September, Seiten 65 bis 69.

Dabei werden Filter mit engspaltigen Kerzen oder Gewebekerzen verwendet. Vor Beginn der Filtration wird in einem Rührbehälter bereits filtrierte quecksilberfreie Produktflüssigkeit vorgelegt. In diese Flüssigkeit wird Aktivkohle mit einer Körnung eingerührt, die größer als die Spaltweite der Filter ist. Nach Homogenisierung wird die Flüssigkeit über die Filter gefahren, so daß auf den Filterkerzen eine gleichmäßige Schicht an Aktivkohle angeschwemmt ist. Sodann wird die zu reinigende Produktflüssigkeit über das Filter gefahren, bis im Filtrat ein vorgegebener Grenzwert für die Quecksilberkonzentration nicht mehr überschritten wird. Wird dieser Grenzwert überschritten, so ist die Aktivkohle mit Quecksilber gesättigt und damit verbraucht. In diesem Fall wird die Filtration gestoppt, der Filterapparat mit Wasser gespült und die entstandene quecksilberhaltige Aktivkohlemaische einer Abwasseraufbereitung unterzogen. Die quecksilberhaltige Aktivkohle wird sodann chemisch behandelt und in einer folgenden Filtration das quecksilberfreie Wasser vom quecksilberhaltigen Aktivkohleschlamm abgetrennt. Der Schlamm wird unter Tage deponiert. Statt metallischem Quecksilber kann auch Quecksilber als Sulfid in einem Anschwemmfilter abfiltriert werden.

Ein weiteres Verfahren zum Entfernen von Quecksilber aus Flüssigkeiten, wie sie in Elektrolysebetrieben anfallen können, ist die Absorption an schwefelhaltigen Gruppen im Gerüst von Ionenaustauschern. Durch Einbau von Thiol-, Isothioronium- oder Thioharnstoff-Gruppen in geeignete polymere Grundkörper können sehr spezifische Ionentauscher hergestellt werden, die auch kleine Quecksilbermengen gut binden. Je nach der aktiven Gruppe sind die Ionentauscher nur sehr schwer regenerierbar, so daß teilweise das Quecksilber nach der Beladung nur durch Destillation zurückgewonnen werden kann, vergleiche Ullmann's Encyklopädie der technischen Chemie, 4. Auflage, Bd. 13, Seite 305, 4. Auflage, Bd. 19, Seiten 668 - 671.

Quecksilber kann auch in einer Fließbettzelle entfernt werden, durch kathodisch geschaltetes Kupferpulver, das auf einen Flüssigkeitsstrom aufgeschwemmt wird. Das Quecksilber wird aus dem Kupferpulver durch Destillation wiedergewonnen.

In einem weiteren Reinigungsverfahren wird zu stark alkalischen Abwässern Calciumchlorid gegeben, wobei das ausfallende Calciumhydroxid Schwermetalle als Spurenfänger bindet, siehe Ullmann's Encyklopädie der technischen Chemie, 4. Auflage, Bd. 19, Seite 668.

Außerdem kann Quecksilber durch Zentrifugieren aus einer Flüssigkeit entfernt werden, siehe Ullmann's Encyclopedia of Industrial Chemistry, 5. Auflage, Bd. A24, Seite 347. Auch die Entfernung durch Filtration mit Plattenfiltern ist beschrieben.

Bei den bekannten Verfahren werden für Alkalialkoholate üblicherweise Abreinigungsgrade von 85 bis 92 % und für Laugen von 99 bis 99,8 % erreicht.

Nachteile der vorstehend beschriebenen Verfahren sind die zum Teil aufwendige Verfahrensführung und die schwierige, wenn nicht unmögliche Wiedergewinnung des Quecksilbers.

Aufgabe der Erfindung ist die Bereitstellung eines Verfahrens zur Entfernung von metallischem Quecksilber aus dieses enthaltenden Flüssigkeiten, das einfach aufgebaut ist, und bei dem das Quecksilber in einfacher Weise wiedergewonnen werden kann.

Gelöst wird diese Aufgabe nach dem Verfahren, wie es in den Patentansprüchen beschrieben ist.

Die Erfindung beruht auf der überraschenden Erkenntnis, daß Quecksilber aus metallisches Quecksilber enthaltenden Flüssigkeitsströmen durch Führen des Flüssigkeitsstromes über aufgerauhte Oberflächen, wie beispielsweise Koaleszenzelemente oder Filterkerzenoberflächen abgeschieden werden kann, da beim Strömen entlang der aufgerauhten Oberfläche (z.B. beim Fluß durch ein Filter- oder Koalisiermedium hindurch) durch die strukturierte Oberfläche feine Quecksilbertröpfchen aus der Flüssigkeit an der Koaleszenzoberfläche abgeschieden werden und sich zu großen Tropfen vereinigen. Diese Quecksilbertropfen rollen im Flüssigkeitsstrom entlang den Fasern an der Faseroberfläche und koaleszieren an den Gewebeknotenpunkten zu größeren Tropfen. Am Ende des Strömungsweges fallen die größeren Tropfen aufgrund ihrer Schwerkraft auf den Grund des Behälters ab, wo sie dann entfernt werden können.

Dabei wird das Quecksilber nicht wie in herkömmlichen Filtrationsverfahren an der Oberfläche der Filterschicht zurückgehalten, sondern strömt mit der Flüssigkeit im Gleichstrom an der Schicht entlang oder durch die Schicht hindurch.

Überraschenderweise trat bei quecksilberhaltigen Flüssigkeiten dieser Koaleszenzeffekt derart auf, daß eine weitgehende Entfernung des Quecksilbers aus der Flüssigkeit möglich wurde.

Dabei wurden bei einem einstufigen Verfahren für Alkoholate Abreinigungsgrade von mindestens 90 %, vorzugsweise mindestens 95 % und für Laugen von mindestens 99 %, bevorzugt mindestens 99,8 % erreicht.

Die Abscheidung von Quecksilbertropfen an der Oberfläche hängt ab von der Art und der Porosität der Oberfläche oder des Mediums, der Fließgeschwindigkeit entlang der Oberfläche bzw. durch das Medium und gegebenenfalls der Höhe des Flüssigkeitsstroms über der Oberfläche bzw. bei mehreren Oberflächen vom Abstand dieser Oberflächen.

### Die strukturierte Oberfläche

Die Oberfläche oder das Medium, an der entlang oder durch das hindurch die metallisches Quecksilber enthaltende Lösung fließt, muß so strukturiert sein, daß sich bei diesem Fluß Quecksilbertropfen wachsender Größe an der Oberfläche bzw. im Medium bilden können. Solche Oberflächen bzw. Medien können vorzugsweise aus Fasern oder aus aufgerauhten Flächen aufgebaut sein. Als aufgerauhten Flächen können Metall- oder Kunststoffflächen verwendet werden, die mittels geeigneter Verfahren aufgerauht wurden, wie durch mechanische Bearbeitung oder Ätzen.

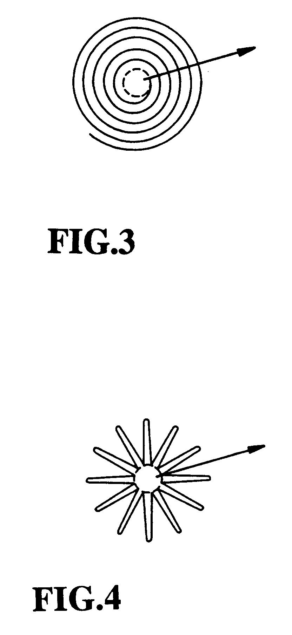

Statt auf aufgerauhten Flächen kann die Oberfläche oder das Medium beispielsweise aus Fasern gebildet werden, die einen Filz oder ein Gewebe bilden können, das gewebt, nicht-gewebt oder geknüpft sein kann. Bei Verwendung von metallischen Fasern sind diese vorzugsweise nicht rund sondern eckig. Das Gewebe kann, beispielsweise bei gewickelten Koalesierkerzen, aus mehreren Schichten unterschiedlicher Porosität bestehen, was in Fig. 3 dargestellt ist. Die Porosität nimmt in Strömungsrichtung, angedeutet durch den Pfeil, zu. Bei gefalteten Kerzen kann die Porosität ebenfalls in Strömungsrichtung zunehmen.

Vorzugsweise weisen die Gewebe eine Porengröße von 0,5 bis 30 µm auf, besonders bevorzugt 0,5 bis 10 µm und sind aus Fasern mit einer Dicke bzw. Durchmesser von 2 bis 30 µm, vorzugsweise 2 bis 15 µm gebildet. Vorzugsweise beträgt die Dicke des Gewebes mindestens 8 mm. Die Fasern können miteinander verwebt oder in sonstiger Weise miteinander verbunden sein, etwa durch Schweißen oder Kleben. Vorzugsweise findet als Fasermaterial Polypropylen Verwendung. Andere geeignete Fasermaterialien sind Polyethylen, Copolymere von Ethylen und Propylen, phenolharzgetränkte Baumwolle, PVC, Nylon und Edelstahl.

Die Porengröße am Eintritt in das Medium, das vorzugsweise ein Koalesierbett ist, beträgt vorzugsweise 0,5 bis 30 µm. Das Faserbett kann eine Dicke von vorzugsweise 2 bis 100 mm aufweisen, wobei eine Dicke von 10 mm, insbesondere 8 mm, besonders bevorzugt wird.

Die Oberfläche oder das Medium kann in Form mehrerer Platten mit engem Spalt oder in Form mehrerer Gewebeschichten, die um ein rohrähnliches Trägergerüst gewickelt oder sternförmig gefaltet sind, gestaltet sein, die aus einem Gewebe- oder Fasermaterial bestehen, oder damit beschichtet sind. Vorzugsweise wird als Trägermaterial für das Medium, das vorzugsweise eine Koalisierschicht ist, eine durchlässige Röhre verwendet, wobei der Flüssigkeitsstrom vom Inneren der Röhre durch das umhüllende Medium, vorzugsweise Faserbett, nach außen fließen gelassen wird.

Vorzugsweise finden zur Bildung dieser Oberflächen handelsübliche Koaleszerelemente, handelsübliche Gewebefilterkerzen oder Körper mit strukturierter Oberfläche Verwendung. Die Filterkerzen oder Kerzenfilter können beidseitig offen sein, so daß das Gewebe der Filterkerzen vom Flüssigkeitsstrom nicht durchströmt, sondern überströmt wird, oder die Filterkerzen sind vorzugsweise am Flüssigkeitszutritt offen und auf der gegenüberliegenden Seite geschlossen. Das Medium bwz. Gewebe wird dabei von der Flüssigkeit und dem abzutrennenden Quecksilber im Gleichstrom durchströmt.

Vorzugsweise verwendbare Koaleszerelemente weisen einen inneren Röhrendurchmesser von 18 bis 120 mm, eine Röhrenlänge von 200 bis 1100 mm, eine Gewebeporengröße auf der Anströmseite von 1 µm und einen Faserdurchmesser von 10 µm auf.

Besonders bevorzugt sind zylindrische Kerzenfilter mit einem Röhrendurchmesser von 18 bis 63 mm, insbesondere mit einem äußeren Röhrendurchmesser von 40 mm, einem inneren Röhrendurchmesser von 25 mm, einer Röhrenlänge von 240 mm, einer Gewebeporengröße von 1 µm auf der Anströmseite, einer Dicke des Filtergewebes von 8 mm und einem Faserdurchmesser von 10 µm.

Statt der Filter- bzw. Koaleszenzfilterkerzen verwendbare Oberflächenmaterialien sind beispielsweise beschrieben in R. Berger, "Koaleszenrprobleme in chemischen Prozesse", VDI-Berichte Nr. 607, (1986), Seite 829 - 848. Es werden u.a. gebogene oder gewellte Koalisierplatten beschrieben, die in beabstandeten Schichten angeordnet sind. Die Koaleszenzelemente, die erfindungsgemäß verwendbar sind, werden üblicherweise in der petrochemischen Industrie zur Wasser- und Ölabtrennung benutzt, sowie als Extraktionshilfen in der chemischen und pharmazeutischen Industrie. Geeignete Koaleszenzelemente sind Koalesierkerzen, hergestellt von Fa. Pall und Koalesierelemente Ibero Typ HP 10-SSZ, hergestellt von Firma Ibero. Verwendbare Filterkerzen sind TriSlot®, vertrieben von der Firma FVG und ConSlot®, hergestellt von Fa. Conslot.

### Flüssigkeitsstrom

Die Geschwindigkeit, mit der der Flüssigkeitsstrom entlang der strukturierten Oberflächen oder durch das Medium hindurch fließen gelassen werden muß, um eine hinreichende Koaleszenzwirkung zu erhalten, die ausreicht, um in der Flüssigkeit enthaltendes Quecksilber im wesentlichen zu entfernen, kann abhängen von der Art des für die strukturierte Oberfläche oder das Medium verwendeten Materials, der Länge des Materials über die der Flüssigkeitsstrom entlang der Oberfläche fließen gelassen wird, bzw. der Dicke des Medium, durch das der Flüssigkeitsstrom fließt, der Höhe des Flüssigkeitsstromes über der strukturierten Oberfläche bzw. dem Abstand zwischen mehreren Oberflächen bzw. dem Durchmesser ggf. verwendeter Kerzenfilter oder Koalisierelemente, sofern sie beidseitig offen sind. Zudem kann die Fließgeschwindigkeit des Flüssigkeitsstromes von der Zusammensetzung des Flüssigkeitsstromes abhängen.

Bei der Verwendung von röhrenförmigen strukturierten Oberflächen bzw. Mediens kann bei einer verwendeten Gewebeporengröße von 0,5 bis 30 µm und einem Faserdurchmesser von 10 µm und bei einem inneren Röhrendurchmesser von 18 mm bis 80 mm, sowie einer Röhrenlänge von 200 mm bis 1100 mm die Anströmgeschwindigkeit der Oberfläche oder des Mediums, vorzugsweise der Koalesierschicht 0,001 bis 0,03 m/s betragen, wenn als Flüssigkeit ein wässriges oder alkoholisches Medium verwendet wird, oder ein Gemisch davon, mit einem anfänglichen Quecksilbergehalt von 8 mg/kg Flüssigkeit bis 35 mg/kg Flüssigkeit. Das Flüssigkeitssystem ist nicht kritisch, so daß beliebige Flüssigkeiten mit einem anfänglichen Quecksilbergehalt von 1 bis 200 mg/kg Flüssigkeit eingesetzt werden können.

Nachstehend wird eine Vorrichtung zum Abtrennen von Quecksilber aus metallisches Quecksilber enthaltenden Flüssigkeitsströmen erläutert, in bezug auf die Zeichmungen, in denen
- Fig. 1: eine schematische Darstellung einer Koalisiervorrichtung zeigt
- Fig. 2: die Geometrie einer Versuchsanlage einer Koalisiervorrichtung zeigt.
- Fig. 3: die Durchströmungsrichtung und Porositätszunahme (Pfeil) eines gewickelten Koalesierelementes schematisch im Querschnitt zeigt und
- Fig. 4: die Durchströmungsrichtung und Porositätszunahme (Pfiel) eines gefalteten Koalesierbettes im Querschnitt zeigt.

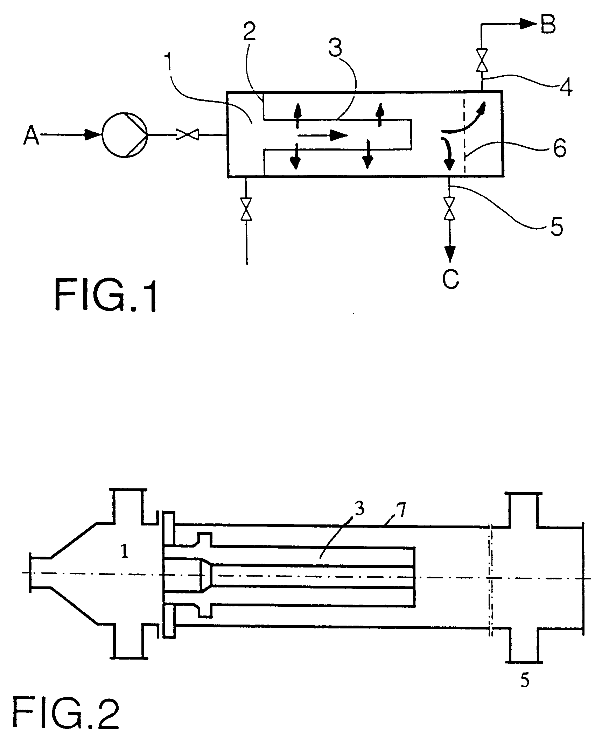

Fig. 1 zeigt eine Koalisiervorrichtung, wobei
- A: die quecksilberhaltige Flüssigkeit,
- B: die vom Quecksilber befreite Flüssigkeit,
- C: das entfernte metallische Quecksilber,

- 1: eine Verteilerkammer,
- 2: einen Adapter
- 3: ein Koalisierfilter
- 4: einen Austrittsstutzen für quecksilberfreie Flüssigkeit
- 5: einen Austrittsstutzen für metallisches Quecksilber und
- 6: ein Abstreiffilter
beschreiben.

Bei der Abtrennung von Quecksilber aus metallisches Quecksilber enthaltenden Flüssigkeiten (A) wird die Flüssigkeit über eine Rohrleitung der Koalisiervorrichtung einem Verteilerkopf (1) zugeführt. Die Flüssigkeit strömt durch ein oder mehrere von einem Adapter (2) gehaltene Koalisierelemente (3), deren Anzahl sich nach dem Durchsatz richtet. Die Flüssigkeit strömt an der Innenoberfläche des Koalisierelementes entlang, und durch das röhrenförmige Koalisiermedium hindurch wobei durch die strukturierte Oberfläche des Koalisiermediums feine Quecksilbertröpfchen aus der Flüssigkeit an der Koalisieroberfläche abgeschieden werden und sich zu größeren Tropfen vereinigen. Die Quecksilbertropfen wachsender Größe rollen an der strukturierten Oberfläche entlang und fallen durch ihre Schwerkraft außerhalb des Koalisierelementes nach unten. Das metallische Quecksilber (C) wird dann beispielsweise an einem Austrittsstutzen (5), der vom Ende des Koalisierelementes einen ausreichenden Abstand aufweist, entfernt oder ausgetragen. Der Abstand zwischen dem Ende des Koalisierelementes und dem Austrittsstutzen für das Quecksilber muß so bemessen sein, daß von dem Flüssigkeitsstrom getragene Quecksilbertropfen auf dem Weg zwischen Koalisierelement und dem Austrittsstutzen aufgrund der Schwerkraft auf den Boden sinken können, z.B. mindestens 750 mm. Die quecksilberfreie Flüssigkeit (B) verläßt die Koalisiervorrichtung am Austrittsstutzen (4). Reicht die Verweilzeit der metallisches Quecksilber enthaltenen Flüssigkeit im Koalisierelement nicht aus, um eine gewünschte Verminderung des Quecksilbergehaltes in der Flüssigkeit zu erreichen, so kann das Verfahren auch mehrstufig durchgeführt werden, in dem beispielsweise mehrere Koalisierelemente hintereinander angeordnet werden. Außerdem kann das vorstehend beschriebene Verfahren auch dadurch modifiziert werden, daß ein Abstreiffilter (6) stromabwärts vom Austrittsstutzen für metallisches Quecksilber (5) aber vor dem Austrittsstutzen für die vom Quecksilber befreite Flüssigkeit derart vorgesehen werden kann, daß die Flüssigkeit durch den Abstreiffilter fließt, bevor sie am Austrittsstutzen (4) die Koalisiervorrichtung verläßt. Noch in der Flüssigkeit schwebende Quecksilbertropfen können an diesem Abstreiffilter abgeschieden werden. Die Quecksilbertropfen scheiden sich dabei auf der der Strömung zugewandten Seite ab und fallen ihrer Schwerkraft entsprechend nach unten, wo sie ebenfalls über den Austrittsstutzen (5) für metallisches Quecksilber entfernt werden können. Der Abscheidefilter hat vorzugsweise eine Porengröße von 30 bis 50 µm und eine Faserdicke von 2 bis 30 mm, sofern er aus Fasern aufgebaut ist. Beispielsweise können Filter aus Polypropylennadelfilz der Fa. Gore mit einem Flächengewicht von 400 g/m² oder Polypropylennadelfilz (Handelsname Meraklon®) der Firma Kayser als Abstreiffilter (6) eingesetzt werden. Bei hinreichend geringer Strömungsgeschwindigkeit des Flüssigkeitsstroms durch den Koalisierfilter und genügendem Abstand des Austrittsstutzens (5) vom Ende des Koalisierelementes bei gegebenem Koalisierelement kann auf den Abstreiffilter (6) verzichtet werden.

Statt röhrenförmigen einseitig geschlossenen oder gegebenenfalls beidseitig offenen Kerzenfiltern oder Koalisierelementen können auch die in "Koaleszenzproblemen in chemischen Prozessen" (a.a.O.) beispielsweise in Abbildung 10 angegebenen Elemente eingesetzt werden.

Nachstehend wird die Erfindung anhand eines bevorzugten Ausführungsbeispiels beschrieben.

In Fig. 2 ist die Geometrie der verwendeten Koalisiervorrichtung schematisch dargestellt.

Die Vorrichtung besteht aus einer Verteilerkammer (1) mit drei Einlässen, durch die metallisches Quecksilber enthaltende Flüssigkeiten ggf. in Verbindung mit anderen Flüssigkeiten, wie Verdünnungsflüssigkeiten eingeführt werden. Weitere Flüssigkeiten, die zur Verdünnung, Einstellung der Viskosität oder anderen Zwecken dienen, können neben der eigentlichen, das Quecksilber enthaltenden Flüssigkeit eingeführt werden.

An die Verteilerkammer (1) schließt sich ein einseitig geschlossener Kerzenfilter (3) an, der über eine Länge von 240 mm einen Innendurchmesser von etwa 40 mm und einen Außendurchmesser von 70 mm aufweist. Am Einlaß des Kerzenfilters weist dieser einen Durchmesser von 50 mm auf. Der Kerzenfilter kann aus folgenden Materialien bestehen:

Polypropylen, Polyethylen, Copolymere von Propylen und Ethylen, Edelstahlfasern mit Porengrößen von 1,0, 4,5 und 10 µm bei einem Faserdurchmesser von 10 µm, beispielsweise der Fa. Pall und ein Gewebekoaleszer der Firma Ibero.

Der Kerzenfilter ist in einem äußeren Rohr (7) angeordnet, dessen Durchmesser größer als der Außendurchmesser des Kerzenfilters ist. Der Austrittsstutzen (5) für metallisches Quecksilber befindet sich in einem Abstand von Einlaß des Kerzenfilters. Die Gesamtlänge der Koalisiervorrichtung vom Einlaß des Kerzenfilters beträgt 1200 mm und die des Filterpaketes ca. 1500 mm. Auf einen Abstreiffilter konnte verzichtet werden.

Die Einbaurichtung des Kerzenfilters ist in der vorliegenden Koalisiervorrichtung nicht kritisch. So kann die Kerze horizontal oder vertikal, aber auch schräg eingebaut werden. Als Werkstoff für die Koalisiervorrichtung wurden Materialien verwendet, die beständig waren gegen chemische Zersetzung, Erosion und Korrosion und bei denen es nicht zu einer Verfärbung der Flüssigkeit des verwendeten Flüssigkeitsstroms kam. Überwiegend verwendeter Werkstoff für die Vorrichtung war Polyethylen, Polypropylen und Edelstahl.

Die Koalisiervorrichtung wurde mit wässriger Natron- bzw. Kalilauge beschickt, wie auch mit 20 bis 40 %iger methanolischer Natrium-/Kaliummethylatlösung oder ethanolischer Natrium-/Kaliummethylatlösung. Die Konzentration der verwendeten Flüssigkeiten wurde im Bereich von 10 bis 50 Gew.-% an NaOH bzw. KOH, bzw. Natrium-/Kaliummethylat variiert. In diesem Konzentrationsbereich wurde eine gleichmäßige Entfernungsleistung für das Quecksilber erreicht.

In der nachstehenden Tabelle sind beispielhaft die Meßergebnisse für den Quecksilbergehalt der Flüssigkeit vor dem Einströmen in die Koalisiervorrichtung und nach Verlassen der Koalisiervorrichtung für verschiedene Ausgangskonzentrationen aufgeführt.

Diese Lösungen wurden mit verschiedenen Mengen an metallischen Quecksilber versetzt, wie sie in der nachstehenden Tabelle angegeben sind.

Die Flüssigkeit wurde mit einem Durchsatz von 150 bis 600 l/h durch die Koalisiervorrichtung fließen gelassen, was einer Anströmgeschwindigkeit des Koalesierbettes (Mediums) von 0,00138 bis 0,0056 m/s bei einer Anströmfläche von 0,03 m² entspricht. Der Eingangsdruck betrug 1 bis 2 bar, wobei ein Druckverlust durch den Kerzenfilter von 20 bis 70 mbar auftrat. Die Variation des Drucks hatte keinen Einfluß auf die erzielten Trennergebnisse.

Die Temperatur der Flüssigkeit in der Vorrichtung wurde im Bereich von 40 bis 80°C variiert. In diesem Bereich hatte die Temperatur keinen Einfluß auf die erzielten Ergebnisse.

| | | | |
|---|---|---|---|
| Einfluß in mg Hg/kg Flüssigkeit: | 24,0 | 9,6 | 31,8 |
| Ausgang in mg Hg/kg Flüssigkeit: | 2,4 | 0,8 | 2,4 |

Wie aus den Ergebnissen der vorstehenden Tabelle ersichtlich ist, wird für die verschiedenen Anfangskonzentrationen an Quecksilber eine sehr effektive Verminderung des Quecksilbergehalts im Ausgang erreicht. Dabei konnte in jedem Fall die Quecksilberkonzentration mindestens um einen Faktor 10 vermindert werden.

Aufgrund der sehr guten Abtrennung des Quecksilbers aus der quecksilberhaltigen Flüssigkeit konnte auf einen Abstreiffilter, wie er in Fig. 1 dargestellt ist, verzichtet werden.

Wie aus den vorstehenden Versuchen deutlich wird, führt das erfindungsgemäße Verfahren zum Abtrennen von Quecksilber aus metallisches Quecksilber enthaltenden Flüssigkeiten zu einer sehr weitgehenden Entfernung von Quecksilber aus den Flüssigkeiten. Insbesondere können Kerzenfilter oder Koalisierelemente zum Abtrennen des Quecksilbers aus den Flüssigkeiten verwendet werden.

Das Verfahren kann beispielsweise eingesetzt werden zur Abtrennung von Quecksilber aus Natronlauge und Kalilauge und Gemischen von beiden über den gesamten Konzentrationsbereich wie auch von alkoholischen Lösungen von Alkalialkoholaten, wie Natrium- oder Kaliummethylat oder -ethylat in den entsprechenden Alkoholen, und wässrigen Lösungen, wie z.B. Sole. Derartige Flüssigkeiten fallen beispielsweise beim Amalgam-Verfahren zur Herstellung von Natron- und Kalilauge und Natrium- und Kaliumalkoholaten und Chlor an. Das Verfahren kann jedoch ganz allgemein eingesetzt werden in Anwendungen, bei denen Quecksilber oder ein ähnlicher Stoff aus Flüssigkeiten entfernt werden muß.

## Patentansprüche

1. Verfahren zum Abtrennen von Quecksilber aus Flüssigkeiten, wobei ein metallisches Quecksilber enthaltender Flüssigkeitsstrom in einem Behältnis entlang einer oder mehrerer Oberflächen oder durch ein oder mehrere Medien fließen gelassen wird, die so strukturiert sind, daß sich bei diesem Fluß Quecksilbertropfen wachsender Größe bilden, die im Strom entlang der Oberfläche(n) bzw. durch das Medium hindurch transportiert werden, und wobei die gebildeten Quecksilbertropfen nach Verlassen der Oberflächen bzw. des Mediums sich von dem übrigen Flüssigkeitsstrom trennen und von dem Flüssigkeitsstrom entfernt werden.

2. Verfahren nach Anspruch 1, wobei die Oberfläche oder das Medium Fasern und aufgerauhte Flächen umfaßt.

3. Verfahren nach Anspruch 2, wobei die Oberfläche oder das Medium ein Gewebe umfaßt.

4. Verfahren nach Anspruch 3, wobei das Gewebe aus einer oder mehreren Schichten besteht, wobei die Porosität der Gewebeschichten oder des Gewebes der Schicht in Flußrichtung zunimmt.

5. Verfahren nach einem der Ansprüche 1 bis 4, wobei die Oberfläche oder das Medium in Röhrenform vorliegt und der Flüssigkeitsstrom durch diese Röhre oder vom Inneren der Röhren durch das Medium fließen gelassen wird, wobei die Oberfläche oder das Medium in Röhrenform auf Trägerröhren aufgesetzt sind, der innere Röhrendurchmesser 18 bis 63 mm, die Röhrenlänge 200 bis 1100 mm und die Anströmgeschwindigkeit der Oberfläche oder des Mediums 0,001 bis 0,03 m/s beträgt.

6. Verfahren nach Anspruch 5, wobei die Röhre am in Flußrichtung liegenden Ende geschlossen ist, der innere Röhrendurchmesser 40 mm, die Röhrenlänge 240 mm und der Abstand der Stelle, an der das Quecksilber von dem Flüssigkeitsstrom entfernt wird, mindestens 750 mm vom Ende der Röhre beträgt.

7. Verfahren nach einem der vorstehenden Ansprüche, wobei der Flüssigkeitsstrom nach der Entfernung des getrennten Quecksilbers durch einen zusätzlichen Abstreiffilter fließen gelassen wird, mit dem noch in der Lösung befindliche Quecksilbertropfen abgestreift werden.

8. Verfahren nach einem der Ansprüche 5 bis 7, wobei als Röhre ein Kerzenfilter oder ein Koalisierelement verwendet wird.

9. Verfahren nach einem der vorstehenden Ansprüche, wobei die metallisches Quecksilber enthaltende Flüssigkeit wässrige Natronlauge, wässrige Kalilauge, methanolische Natrium- oder Kaliummethylatlösung oder ethanolische Natrium- oder Kaliummethylatlösung oder ein Gemisch davon ist.

10. Verwendung von Kerzenfiltern oder Koalisierelementen zum Abtrennen von metallischem Quecksilber aus Flüssigkeiten.
